# EUROPEAN PATENT SPECIFICATION

(11) **EP 0 601 771 B1**
(45) Date of publication and mention of the grant of the patent: **03.02.1999**
(21) Application number: 93309564.8
(22) Date of filing: 30.11.1993
(51) Int. Cl.: E05B 49/00

(54) **A vehicle security system**
Fahrzeugsicherheitssystem
Système de sécurité pour véhicule

(30) Priority: 05.12.1992 GB 9225485
(43) Date of publication of application: 15.06.1994
(73) Proprietor: ROVER GROUP LIMITED, Warwick, Warwickshire CV34 6RG (GB)
(72) Inventor: Talbot, Kevin Trevor, Lichfield, Staffordshire WS13 7JJ (GB)
(74) Representative: Farrow, Robert Michael

(56) References cited:
- EP-A- 0 033 261
- FR-A- 2 589 187
- GB-A- 1 314 523

## Description

The present invention relates to vehicle security systems.

As vehicle security systems are becoming more secure there is an increasing danger that if the normal means of securing the vehicle, such as a radio frequency transmitter, malfunctions or is lost, the driver is left unable to use the vehicle.

The present invention therefore aims to provide a back-up system whereby a key, such as the vehicle door or ignition key can be used to input a code which can be used for example to gain entry to or allow the starting of a vehicle which has been superlocked or had its engine immobilised by other means such as a radio frequency or ultrasound transmitter.

It is known from EP 0 033 261 to provide a lock system for a safe wherein a key is provided which has a pair of cam surfaces and which can be turned to operate a pair of switches thereby producing coded electric signals which are used to initiate unlocking of the safe.

The present invention provides a vehicle security system comprising a key operated lock mechanism, including signal generating means for operation by a coded sequence of turns of a key in the lock mechanism to produce a correspondingly coded signal, and control means for issuing a command signal upon receipt of said coded signal, wherein the system is a vehicle security system, the control means normally operates in response to signals from a transmitter, and the signal generating means acts as a back-up for the transmitter.

The signal generating means may be arranged to produce two signals simultaneously. One of those may be the coded signal. The other may be a comparison signal enabling the control means to check the coded signal, for example by having a series of pulses each of which triggers the control means to check the coded signal.

The sequence of turns may comprise turns to either side of a central position, or turns between a lock position, a central position and an unlock position. In a conventional car door lock where the central position is neutral and the lock and unlock positions are on either side, these are the same.

The coded signal may be generated by a door lock switch which may have a latch operation producing a signal which is at one level when the door is locked and another level when the door is unlocked.

The security system may further comprise an engine immobilisation means arranged to re-mobilise an engine upon receipt of the command signal.

A preferred embodiment of the present invention will now be described by way of example only with reference to the accompanying drawings in which:-
Figure 1 is a diagrammatic representation of a security system according to the invention;
Figure 2 shows the operation of the signal producing means of the system of Figure 1; and
Figure 3 shows an example of a coded signal and a comparision signal as used in the system of Figure 1.

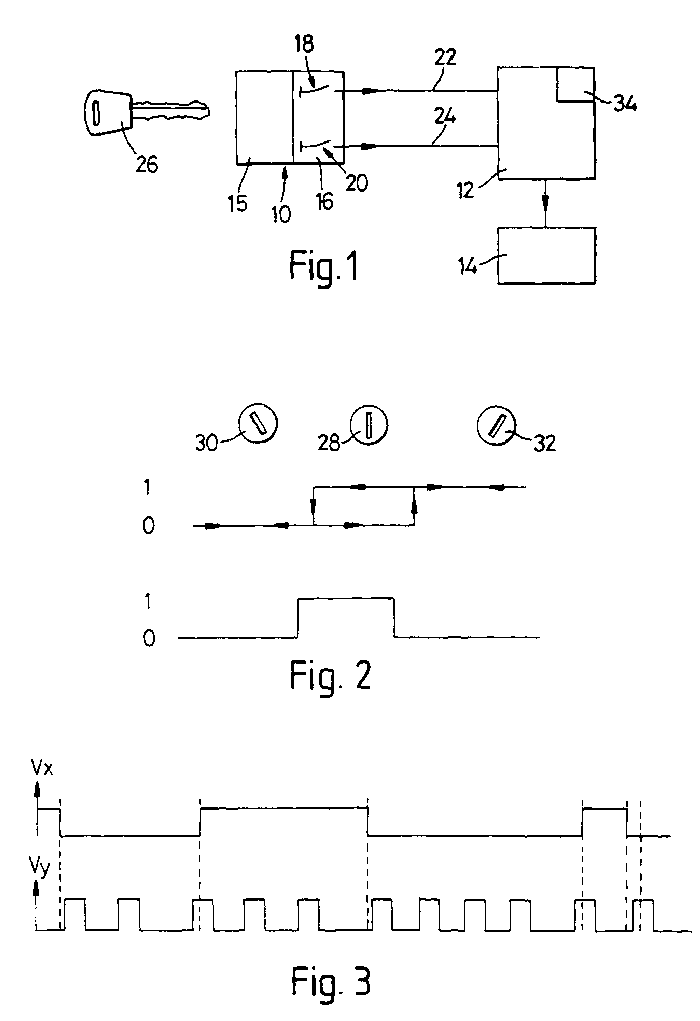

Referring to Figure 1 a vehicle security system comprises a door lock mechanism 10 housed in a vehicle door, a security controller 12 and an engine controller 14. The door lock mechanism 10 comprises a mechanical door lock 15 and signal generating means 16 including first and second switches 18, 20, which produces a code signal on line 22 and a comparison signal on line 24, each of which is input to the security controller 12.

The door lock mechanism 10 is designed to receive a key 26 which can be turned in the lock mechanism to lock or unlock the door. The key is always inserted or removed in a central neutral position and is turned anti-clockwise and back again to unlock the door and clockwise and back again to lock it.

The signal generating means 16 is also operated by the same key movements, as shown in Figure 2.

The first switch 18 is a door lock switch which operates the central door locking system of the vehicle. While the key is in the central position as shown at 28 the signal on line 22 remains in its current state, high or low and the central door locking system remains in its current state, either locked or unlocked. If the key is turned anti-clockwise to an unlock position as shown at 30 the signal on line 22 stays low if it is low, or goes low if it is high, and the central door locking system is unlocked. If the key 26 is turned clockwise to a lock position as shown at 32 the signal on line 22 goes hign and the central door locking system is locked.

The second switch 20 is a key switch which produces a signal on line 24 which is dependent upon the position of the key 26 in the lock mechanism 10. If the key is in the central position the signal on line 24 is high. If the key is in either the locked or the unlocked position the signal on line 24 is low. The key switch is normally used to differentiate between locking or unlocking carried out using the key and using a sill button.

The operation of the first and second switches is not simultaneous. When the key is turned clockwise the key switch operates slightly before the lock switch, and when the key is turned anti-clockwise the key switch operates just after the lock switch.

As well as controlling the door locking system the security controller also controls the engine controller 14 which can immobilise and re-mobilise a vehicle engine.

Under normal operation the security controller only controls the engine controller in response to signals from an RF transmitter. However the security controller 12 has a code stored in memory 34 and it continually checks the signals on lines 22 and 24 against the stored code. The code stored is in the form of a sequence of digits 23411. For the signals on lines 22 and 24 to correspond to this code the key 26 must be turned twice to the unlock position, three times to the lock position, four times to the unlock position, once to the lock position and once to the unlock position, the key being turned back to the central position after each turn. This produces a code signal Vx and a comparison signal Vy as shown in Figure 3.

Every time the key is turned one way or the other producing a pulse in the comparison signal Vy the security controller checks the code signal Vx at the end of the pulse to see whether it is high or low. If the code signal Vx follows the form shown in Figure 3 ie being low for the first two pulses in Vy, high for the next three, low for the next four, high for the next one and low for the next one, the security controller issues a command signal to the engine controller 14 to re-mobilise the engine. Thus if a driver has immobilised the engine using an RF transmitter which has since been broken or lost, the driver can still re-mobilise the engine to make the vehicle drivable until the RF transmitter is repaired or replaced.

The security controller could obviously be programmed to perform other functions on receipt of the correct coded signal, such as de-activating a deadlocking system or re-enabling any components of the vehicle which have been disabled for security or other purposes.

It is an advantage of the embodiment described above that it makes use of switches and signals already available in a known security system. In other systems the switches and signals woula be different and would have to be used in other ways to form a code. For example there might be a single signal variable between more than two levels or more than two signals all of which could be combined to form a code.

## Claims

1. A vehicle security system comprising a key operated lock mechanism (15), including signal generating means (18, 20) for operation by a coded sequence of turns of a key (26) in the lock mechanism to produce a correspondingly coded signal, and control means (12) for issuing a command signal upon receipt of said coded signal, characterized in that the system is a vehicle security system, the control means (12) normally operates in response to signals from a transmitter, and the signal generating means (18, 20) acts as a back-up for the transmitter.

2. A security system according to claim 1 wherein the signal generating means (16) generates two signals simultaneously, one being said coded signal and one being a comparison signal enabling the control means (12) to check the coded signal.

3. A security system according to claim 1 or claim 2 wherein each of said sequence of turns comprises a turn of a key (26) away from a central position (28) and back.

4. A security system according to any foregoing claim wherein said sequence of turns comprises turns between a lock position (30), a neutral position (28) and an unlock position (32).

5. A security system according to claim 3 or claim 4 wherein the signal generating means (16) includes a first switch (18) for producing said coded signal.

6. A security system according to claim 5 wherein said first switch (18) is a door locking switch.

7. A security system according to claim 6 wherein said first switch (18) is arranged to produce a signal which is at one level when a door of the vehicle is locked and another level when said door is unlocked.

8. A security system according to any one of claims 3 to 6 when dependent on claim 2 wherein the signal generating means (16) includes a second switch (20) for producing the comparison signal.

9. A security system according to claim 8 wherein said second switch (20) is a key switch arranged to produce a key position signal which indicates the position of the key in the lock mechanism.

10. A security system according to claim 9 wherein the control means (12) is arranged to use the key position signal as the comparison signal.

11. A security system according to any foregoing claim further comprising engine immobilisation means (14) arranged to re-mobilise an engine upon receipt of said command signal.

## Patentansprüche

1. Fahrzeugsicherungsanlage mit einem schlüsselbetätigten Verriegelungsmechanismus (15), die ein Signalerzeugungsmittel (18, 20) zum Betrieb durch eine codierte Folge von Drehungen eines Schlüssels (26) im Verriegelungsmechanismus zur Erzeugung eines dementsprechend codierten Signals und ein Steuermittel (12) zur Abgabe eines Befehlssignals bei Empfang des codierten Signals enthält, dadurch gekennzeichnet, daß es sich bei der Anlage um eine Fahrzeugsicherungsanlage handelt, das Steuermittel (12) normalerweise als Reaktion auf Signale von einem Sender betrieben wird und das Signalerzeugungsmittel (18, 20) als Reserve für den Sender fungiert.

2. Sicherungsanlage nach Anspruch 1, bei der das Signalerzeugungsmittel (16) gleichzeitig zwei Signale erzeugt, wobei eines das codierte Signal und eines ein Vergleichssignal ist, das dem Steuermittel (12) gestattet, das codierte Signal zu überprüfen.

3. Sicherungsanlage nach Anspruch 1 oder 2, bei der jede der Folge von Drehungen eine Drehung eines Schlüssels (26) aus einer mittleren Position (28) und zurück umfaßt.

4. Sicherungsanlage nach einem der vorhergehenden Ansprüche, bei der die Folge von Drehungen Drehungen zwischen einer Verriegelungsposition (30), einer neutralen Position (28) und einer Entriegelungsposition (32) umfaßt.

5. Sicherungsanlage nach Anspruch 3 oder 4, bei der das Signalerzeugungsmittel (16) einen ersten Schalter (18) zur Erzeugung des codierten Signals enthält.

6. Sicherungsanlage nach Anspruch 5, bei der der erste Schalter (18) ein Türverriegelungsschalter ist.

7. Sicherungsanlage nach Anspruch 6, bei der der erste Schalter (18) zur Erzeugung eines Signals, das sich auf einem Pegel befindet, wenn eine Fahrzeugtür verriegelt ist, und auf einem anderen Pegel, wenn die Tür entriegelt ist, ausgeführt ist.

8. Sicherungsanlage nach einem der Ansprüche 3 bis 6 , sofern von Anspruch 2 abhängig, bei der das Signalerzeugungsmittel (16) einen zweiten Schalter (20) zur Erzeugung des Vergleichssignals enthält.

9. Sicherungsanlage nach Anspruch 8, bei der der zweite Schalter (20) ein Schlüsselschalter ist, der zur Erzeugung eines Schlüsselpositionssignals, das die Position des Schlüssels im Verriegelungsmechanismus anzeigt, ausgeführt ist.

10. Sicherungsanlage nach Anspruch 9, bei der das Steuermittel (12) zur Verwendung des Schlüsselpositionssignals als Vergleichssignal ausgeführt ist.

11. Sicherungsanlage nach einem der vorhergehenden Ansprüche, weiterhin mit einem Motorsperrmittel (14), der zur Entsperrung eines Motors bei Empfang des Befehlssignals ausgeführt ist.

## Revendications

1. Système de sécurité pour véhicule, comprenant un mécanisme de verrouillage (15) actionné par une clé, comportant un moyen de génération de signaux (18, 20) destiné à être activé par une séquence codée de tours d'une clé (26) dans le mécanisme de verrouillage afin de produire un signal codé correspondant, et un moyen de commande (12) pour délivrer un signal de commande à la réception dudit signal codé, caractérise en ce que le système est un système de sécurité pour véhicule, le moyen de commande (12) s'active normalement en réponse à des signaux provenant d'un émetteur, et le moyen de génération de signaux (18, 20) agit en tant que système de secours pour l'émetteur.

2. Système de sécurité selon la revendication 1, dans lequel le moyen de génération de signaux (16) génère deux signaux simultanément, un étant le signal codé et l'autre étant un signal de comparaison permettant au moyen de commande (12) de vérifier le signal codé.

3. Système de sécurité selon la revendication 1 ou la revendication 2, dans lequel chacun des tours de ladite séquence de tour comprend un tour d'une clé (26) s'écartant d'une position centrale (28) et y revenant.

4. Système de sécurité selon l'une quelconque des revendications précédentes, dans lequel ladite séquence de tours comprend des tours entre une position de verrouillage (30), une position neutre (28) et une position de déverrouillage (32).

5. Système de sécurité selon la revendication 3 ou la revendication 4, dans lequel le moyen de génération de signaux (16) comporte un premier commutateur (18) pour produire ledit signal codé.

6. Système de sécurité selon la revendication 5, dans lequel ledit premier commutateur (18) est un commutateur de verrouillage de porte.

7. Système de sécurité selon la revendication 6, dans lequel ledit premier commutateur (18) est prévu pour produire un signal qui est à un niveau lorsqu'une porte du véhicule est verrouillée et à un autre niveau lorsque ladite porte est déverrouillée.

8. Système de sécurité selon l'une quelconque des revendications 3 à 6, lorsqu'elles dépendent de la revendication 2, dans lequel le moyen de génération de signaux (16) comporte un deuxième commutateur (20) pour produire le signal de comparaison.

9. Système de sécurité selon la revendication 8, dans lequel ledit deuxième commutateur (20) est un commutateur à clé prévu pour produire un signal de position de clé qui indique la position de la clé dans le mécanisme de verrouillage.

10. Système de sécurité selon la revendication 9, dans lequel le moyen de commande (12) est prévu pour utiliser le signal de position de clé comme signal de comparaison.

11. Système de sécurité selon l'une quelconque des revendications précédentes, comprenant en outre un moyen d'immobilisation du moteur (14) prévu pour désimmobiliser un moteur à la réception dudit signal de commande.
